# EUROPÄISCHE PATENTSCHRIFT

(11) **EP 2 173 945 B1**
(45) Veröffentlichungstag und Bekanntmachung des Hinweises auf die Patenterteilung: **09.09.2015**
(21) Anmeldenummer: 08774758.0
(22) Anmeldetag: 04.07.2008
(51) Int. Cl.: C09C 1/52, C09C 3/10, C09C 1/02, C09C 1/42, D21H 17/20, D21H 17/69, D21H 21/18

(54) **VERFAHREN ZUR HERSTELLUNG VON WÄSSRIGEN ANSCHLÄMMUNGEN VON FEINTEILIGEN FÜLLSTOFFEN UND IHRE VERWENDUNG ZUR HERSTELLUNG VON PAPIEREN MIT HOHEM FÜLLSTOFFGEHALT UND HOHER TROCKENFESTIGKEIT**
METHOD FOR PRODUCING AQUEOUS SUSPENSIONS OF FINE PARTICULATE FILLERS AND USE THEREOF FOR PRODUCING PAPERS HAVING A HIGH FILLER CONTENT AND A HIGH DRY STRENGTH
PROCÉDÉ POUR PRÉPARER DES SUSPENSIONS AQUEUSES DE CHARGES EN FINES PARTICULES ET LEUR UTILISATION POUR PRODUIRE DES PAPIERS À TENEUR EN CHARGES ET À RÉSISTANCE À SEC ÉLEVÉES

(30) Priorität: 05.07.2007 EP 07111863
(43) Veröffentlichungstag der Anmeldung: 14.04.2010
(73) Patentinhaber: BASF SE, 67056 Ludwigshafen (DE)
(72) Erfinder: ESSER, Anton, 67117 Limburgerhof (DE); HÄHNLE, Hans-Joachim, 67435 Neustadt (DE); SCHROEDER, Marc, Canton, MI 48188 (US)
(86) Internationale Anmeldenummer: PCT/EP2008/058646
(87) Internationale Veröffentlichungsnummer: WO 2009/004080

(56) Entgegenhaltungen:
- WO-A-03/087472
- DE-A1- 4 105 919
- DE-A1- 10 209 448
- GB-A- 1 505 641

## Beschreibung

Die Erfindung betrifft ein Verfahren zur Behandlung von wässrigen Anschlämmungen von feinteiligen Füllstoffen sowie deren Verwendung zur Herstellung von Papieren mit hohem Füllstoffgehalt und hoher Trockenfestigkeit.

Bei der Herstellung füllstoffhaltiger Papiere wird die Füllstoffslurry zu der Fasersuspension zugegeben, bevor diese zum Former der Papiermaschine weitergeleitet wird. Ein Retentionsmittel oder ein Retentionsmittelsystem wird in der Regel zu der Füllstoff/Faserstoffsuspension zugesetzt, um soviel wie möglich Füllstoff im Papierblatt zu retenieren. Die Zugabe des Füllstoffs zum Papier gibt dem Papiermacher die Möglichkeit, zahlreiche Verbesserungen der Blatteigenschaften zu erreichen. Dazu gehören Eigenschaften wie die Opazität, Weisse, Haptik und Bedruckbarkeit.

Wenn darüber hinaus der Füllstoff billiger ist als der Faserstoff, kann die Zugabe oder vermehrte Zugabe von Füllstoff zu einer Reduzierung des Faserstoffanteils und damit zu einer Reduzierung der Herstellkosten des Papiers führen. Füllstoffhaltige Papiere bzw. Papiere mit besonders hohem Füllstoffgehalt lassen sich leichter trocken als nicht füllstoffhaltige Papiere bzw. als Papiere mit geringerem Füllstoffgehalt. Als Folge daraus kann die Papiermaschine schneller und mit niedrigerem Dampfverbrauch betrieben werden, was sowohl die Produktivität erhöht als auch die Kosten senkt.

Jedoch bringt die Füllstoffzugabe zur Fasersuspension auch Nachteile mit sich, die nur teilweise durch die Zugabe weiterer Papierhilfsmittel kompensiert werden können. Für ein gegebenes Flächengewicht gibt es Grenzen bezüglich der einsetzbaren Füllstoffmenge. Die Festigkeitseigenschaften des Papiers sind normalerweise die wichtigsten Parameter, die die Füllstoffmenge im Papier limitieren. Auch andere Faktoren, wie die Füllstoffretention, die Entwässerung der Papierstoffsuspension sowie ein eventuell erhöhter Chemikalienbedarf bei Retention und Leimung können hier eine Rolle spielen.

Der Verlust von Festigkeitseigenschaften von Papieren kann in machen Fällen ganz oder teilweise durch den Einsatz von Trocken- und Nassverfestigern kompensiert werden. Eine gängige Vorgehensweise ist dabei die Zugabe von kationischer Stärke als Trockenverfestiger in den Papierstoff. Ebenso werden synthetische Trocken- und Nassverfestiger z.B. auf der Basis kationischer oder anionischer Polyacrylamide eingesetzt. Die Zugabemenge und die verfestigende Wirkung sind jedoch in den meisten Fällen begrenzt. Im gleichen Maße ist auch die kompensierende Wirkung im Bezug auf den Festigkeitsverlust durch Füllstofferhöhung und damit auch die überhaupt realisierbare Füllstoffzunahme begrenzt. Darüber hinaus werden nicht alle Festigkeitseigenschaften in gleichem Maße und in manchen Fällen überhaupt nur unzureichend durch den Einsatz von Trockenverfestigern erhöht. Ein wichtiges Beispiel dafür ist die Weiterreisarbeit, die durch den Einsatz von Stärke oder synthetischen Trockenverfestigern im Vergleich zu anderen Festigkeitsparametern nur geringfügig beeinflusst wird. Die Erhöhung des Füllstoffgehaltes im Papier hat dagegen in der Regel einen sehr stark negativen Einfluss auf die Weiterreisarbeit.

Weitere wichtige Eigenschaften sind die Dicke sowie die Steifigkeit des Papiers. Die Erhöhung des Füllstoffgehaltes führt bei gleichem Flächengewicht zu einer Zunahme der Papierdichte und einer Abnahme der Dicke des Papierblattes. Letzteres führt zu einer erheblichen Abnahme der Papiersteifigkeit. Diese Abnahme der Papiersteifigkeit kann in vielen Fällen nicht allein durch den Einsatz von Trockenverfestigern ausgeglichen werden. Häufig sind zusätzliche Maßnahmen wie etwa die Reduzierung des mechanischen Druckes in der Pressenpartie in den Glättwerken, in Kalandern oder in der Trockenpartie der Papiermaschine notwendig. Letzteres kompensiert den Dickeverlust durch Füllstofferhöhung ganz oder teilweise.

Aus der WO 03/087472 A1 ist ein Verfahren bekannt, das die Behandlung von Füllstoffen mit einer Zusammensetzung bestehend aus gequollenen Stärkepartikeln und Latices beschreibt. Die in dieser Schrift eingesetzten Latices sind wasserunlöslich und liegen in Form einer Dispersion vor. Nach separater Herstellung dieser Zusammensetzung wird diese zur unbehandelten Füllstoffslurry zugegeben, abschließend erfolgt die Zugabe zum Faserstoff und die Blattbildung. Gemäß der Lehre der WO 03/087472 A1 handelt es sich bei den Stärkepartikeln um gequollene Stärkepartikel. Weiterhin kann die Zusammensetzung noch andere Coadditive wie anionische oder kationische Coadditive enthalten.

Der vorliegenden Erfindung lag die Aufgabe zugrunde, weitere alternative Verfahren zur Behandlung von wässrigen Anschlämmungen von feinteiligen Füllstoffen zur Verfügung zu stellen. Die damit hergestellten Papiere sollen Festigkeitseigenschaften aufweisen, die mit denen herkömmlicher Papiere mit niedrigem Füllstoffgehalt vergleichbar sind. Zu diesen Festigkeitseigenschaften zählen vor allem die Trockenreislänge, die innere Festigkeit sowie die Steifigkeit des Papiers.

Die Aufgabe wird erfindungsgemäß gelöst mit einem Verfahren zur Behandlung von wässrigen Anschlämmungen von feinteiligen Füllstoffen, wobei man die Behandlung durch Erwärmung einer wässrige Anschlämmung mindestens eines feinteiligen Füllstoffs und anschließend durch Zugabe einer wässrigen Dispersion mindestens eines Latices durchführt.

Die nach dem erfindungsgemäßen Verfahren hergestellten wässrigen Anschlämmungen enthalten beispielsweise 1 bis 70 Gew.-%, bevorzugt 5 bis 50 Gew.-%, besonders bevorzugt 10 bis 40 Gew.-%, mindestens eines feinteiligen Füllstoffes. Die Menge an Latex beträgt beispielsweise 0,01 bis 10 Gew.-%, vorzugsweise 0,1 bis 5 Gew.-%, besonders bevorzugt 0,2 bis 3 Gew.-%, bezogen auf den Füllstoff.

Erfindungsgemäß wird die wässrige Anschlämmung mindestens eines feinteiligen Füllstoffs vor der Zugabe der wässrigen Dispersion mindestens eines Latices durch Erwärmung vorbehandelt. Die wässrigen Anschlämmungen werden auf eine Temperatur von mindestens 45 °C, besonders bevorzugt auf mindestens 50 °C erwärmt (jeweils bei Atmosphärendruck), wobei selbstverständlich die Siedetemperatur (bei Atmosphärendruck) der wässrigen Anschlämmung nicht überschritten wird.

Die Erwärmung erfolgt üblicherweise durch Zuführen von Energie. Wird als feinteiliger Füllstoff Calciumcarbonat verwendet, ist es auch möglich, die freiwerdende Wärme bei der Ausfällung des Calciumcarbonats aus Kalkmilch beim Einleiten von Kohlendioxid zu nutzen. Die auf diese Weise hergestellte Calciumcarbonatanschlämmung ist bereits ausreichend für das erfindungsgemäße Verfahren erwärmt.

In der Praxis kann daher beispielsweise die Ausfällung des Füllstoffs Calciumcarbonat bei einem Füllstoffhersteller durchgeführt werden. Anschließend wird die durch die freiwerdende Reaktionswärme noch wärmte Füllstoffslurry nach dem erfindungsgemäßen Verfahren durch die Zugabe einer wässrigen Dispersion mindestens eines Latices behandelt. Bevorzugt wird in diesem Fall zur Erhöhung der Lager- und Transportstabilität der Anschlämmung ein Dispergator zugesetzt, beispielsweise Polyacrylsäure (Polysalz S^{®}, BASF SE). Anschließend kann die behandelte und dispergierte Anschlämmung aufkonzentriert werden, beispielsweise durch Zentrifugation bis zu einem Feststoffgehalt von bis zu 50 %, bevorzugt bis zu 60 % und besonders bevorzugt bis zu 65 %. Diese Anschlämmung feinteiliger Füllstoffe ist abschließend sowohl lagerfähig als auch zur Endverarbeitung in einer Papierfabrik transportierbar.

Alternativ kann beispielsweise Calciumcarbonat als Füllstoff nach dem erfindungsgemäßen Verfahren durch Erwärmung und Zugabe der wässrigen Dispersion mindestens eines Latices zunächst behandelt werden, und anschließend erfolgt die Aufkonzentration bis zum Erhalt eines Pulvers zum Beispiel durch Sprühtrocknung. Die Sprühtrocknung kann gegebenenfalls unter Einsatz eines handelsüblichen Sprühhilfsmittels erfolgen, auch der zuvor erwähnte Dispergator kann optional eingesetzt werden. Vorteilhaft an dieser Verfahrensvariante ist, dass der behandelte Füllstoff in festem Zustand, also ohne Wasser, zur Endverarbeitung in der Papierfabrik transportiert werden kann. Vor Ort kann der behandelte Füllstoff durch Zugabe von Wasser wieder redispergiert werden.

Unter dem Begriff Latex im Sinne der vorliegenden Erfindungen werden wasserunlösliche Homo- und Copolymerisate verstanden, die vorzugsweise in Form von Dispersionen oder Emulsionen eingesetzt werden.

Der Latex besteht vorzugsweise zu mindestens 40 Gew.-%, bevorzugt zu mindestens 60 Gew.-%, besonders bevorzugt zu mindestens 80 Gew.-% aus sogenannten Hauptmonomeren (a).

Die Hauptmonomeren (a) sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.
Als Vinylether zu nennen sind z. B. Vinylmethylether oder Vinylisobutylether. Bevorzugt sind Vinylether von 1 bis 4 C-Atome enthaltenden Alkoholen.

Als aliphatische Kohlenwasserstoffe mit 2 bis 8 C-Atomen und ein oder zwei olefinischen Doppelbindungen seien Ethylen, Propylen, Butadien, Isopren und Chloropren genannt.

Bevorzugte Hauptmonomere (a) sind C₁-C₂₀-Alkyl(meth)acrylate und Mischungen der Alkyl(meth)acrylate mit Vinylaromaten, insbesondere Styrol (zusammenfassend auch als Polyacrylat-Latex bezeichnet) oder Kohlenwasserstoffe mit 2 Doppelbindungen, insbesondere Butadien, oder Gemische von derartigen Kohlenwasserstoffen mit Vinylaromaten, insbesondere Styrol (zusammenfassen auch als Polybutadien-Latex bezeichnet).

Bei Polyacrylat-Latices kann das Gewichtsverhältnis von Alkyl(meth)acrylaten zu Vinylaromaten (insbesondere Styrol) z. B. 10:90 bis 90:10, vorzugsweise 20:80 bis 80:20 betragen.

Bei Polybutadien-Latices kann das Gewichtsverhältnis von Butadien zu Vinylaromaten (insbesondere Styrol) z. B. 10:90 bis 90:10, vorzugsweise 20:80 bis 80:20 betragen.

Neben den Hauptmonomeren (a) kann der Latex weitere Monomere (b) enthalten, z. B. Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Fumarsäure und Aconitsäure. Der Gehalt an ethylenisch ungesättigten Säuren im Latex ist im Allgemeinen kleiner 10 Gew.-%.

Weitere Monomere (b) sind z. B. auch Hydroxylgruppen enthaltende Monomere, insbesondere C₁-C₁₀-Hydroxyalkyl(meth)acrylate, oder Amide wie (Meth)acrylamid.

Weitere Monomere (b) sind Verbindungen die mindestens zwei radikalisch polymerisierbare Doppelbindungen aufweisen, bevorzugt 2 bis 6, besonders bevorzugt 2 bis 4, ganz besonders bevorzugt 2 bis 3 und insbesondere 2. Derartige Verbindungen werden auch als Vernetzer bezeichnet.

Die mindestens zwei radikalisch polymerisierbaren Doppelbindungen der Vernetzer (b) können dabei ausgewählt sein aus der Gruppe bestehend aus (Meth)acryl-, Vinylether-, Vinylester-, Allylether- und Allylestergruppen. Beispiele für Vernetzer (b) sind 1,2-Ethandioldi(meth)acrylat, 1,3-Propandioldi(meth)acrylat, 1,2-Propandioldi(meth)acrylat, 1,4-Butandioldi(meth)acrylat, 1,6-Hexandioldi(meth)acrylat, Neopentylglykol-di(meth)acrylat, Trimethylolpropantrioldi(meth)acrylat, Pentaerythrittetra(meth)acrylat, 1,4-Butandioldivinylether, 1,6-Hexandioldivinylether, 1,4-Cyclohexandioldivinylether, Divinylbenzol, Allylacrylat, Allylmethacrylat, Methallylacrylat, Methallylmethacrylat, (Meth)Acrylsäure but-3-en-2-ylester, (Meth)Acrylsäure but-2-en-1-ylester, (Meth)Acrylsäure 3-methyl-but-2-en-1-ylester, Ester der (Meth)Acrylsäure mit Geraniol, Citronellol, Zimtalkohol, Glycerinmono- oder -diallytether, Trimethylolpropanmono- oder -diallylether, Ethylenglykolmonoallylether, Diethylenglykolmonoallylether, Propylenglykolmonoallylether, Dipropylenglykolmonoallylether, 1,3-Propandiolmonoallylether, 1,4-Butandiolmonoallylether sowie ferner Itaconsäurediallylester. Bevorzugt sind Allylacrylat, Divinylbenzol, 1,4-Butandioldiacrylat und 1,6-Hexandioldiacrylat.

Bevorzugt werden Polyacrylat-Latices eingesetzt, die aus Vinylaromaten, C₁-C₂₀-Alkyl(meth)acrylaten und weiteren hydrophilen Monomeren, wie beispielsweise (Meth)acrylnitril, (Meth)acrylamid und (Meth)acrylsäure, zusammengesetzt sind. Beispielsweise enthalten derartige bevorzugte Polyacrylat-Latices 20 - 50 Gew.-% Styrol, 30 - 80 Gew.-% C₁-C₂₀-Alkyl(meth)acrylate und 0 - 30 Gew.-% weitere hydrophile Monomere, wie beispielsweise (Meth)acrylnitril, (Meth)acrylamid und (Meth)acrylsäure.

Die Herstellung der Latices erfolgt in der Regel durch Emulsionspolymerisation, es handelt sich daher um ein Emulsionspolymerisat. Die Herstellung wässriger Polymerisatdispersionen nach dem Verfahren der radikalischen Emulsionspolymerisation ist an sich bekannt (vgl. Houben-Weyl, Methoden der organischen Chemie, Band XIV, Makromolekulare Stoffe, loc. cit., Seiten 133ff).

Bei der Emulsionspolymerisation zur Herstellung der Latices werden ionische und/oder nicht-ionische Emulgatoren und/oder Schutzkolloide bzw. Stabilisatoren als grenzflächenaktive Verbindungen verwendet. Die grenzflächenaktive Substanz wird üblicherweise in Mengen von 0,1 bis 10 Gew.-%, insbesondere von 0,2 bis 3 Gew.-% bezogen auf die zu polymerisierenden Monomeren verwendet.

Gebräuchliche Emulgatoren sind z. B. Ammonium- oder Alkalimetallsalze höherer Fettalkoholsulfate, wie Na-n-Laurylsulfat, Fettalkoholphosphate, ethoxylierte C₈- bis C₁₀-Alkylphenole mit einem Ethoxylierungsgrad von 3 bis 30 sowie ethoxylierte C₈- bis C₂₅-Fettalkohole mit einem Ethoxylierungsgrad von 5 bis 50. Denkbar sind auch Gemische aus nichtionischen und ionischen Emulgatoren. Ferner geeignet sind phosphat- oder sulfatgruppenhaltige, ethoxylierte und/oder propoxylierte Alkylhenole und/oder Fettalkohole. Weitere geeignete Emulgatoren sind in Houben-Weyl, Methoden der organischen Chemie, Band XIV, Makromolekulare Stoffe, Georg Thieme Verlag, Stuttgart, 1961, Seiten 192 bis 209 aufgeführt.

Wasserlösliche Initiatoren für die Emulsionspolymerisation zur Herstellung der Latices sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid.
Geeignet sind auch sogenannte Reduktions-Oxidations(Red-Ox)-Initiator Systeme.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Emulsionspolymerisation können Regler eingesetzt werden, z. B. in Mengen von 0 bis 3 Gew.-Teile, bezogen auf 100 Gew.-Teile der zu polymerisierenden Monomeren, durch die die Molmasse verringert wird. Geeignet sind z. B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan oder Regler ohne Thiolgruppe, insbesondere z. B. Terpinolen.

Die Emulsionspolymerisation zur Herstellung der Latices erfolgt in der Regel bei 30 bis 130 °C, vorzugsweise bei 50 bis 100 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d. h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Im Anschluß an die (Co)Polymerisation können die im Latex enthaltenen Säuregruppen noch zumindest teilweise neutralisiert werden. Dies kann beispielsweise erfolgen mit Oxiden, Hydroxiden, Carbonaten oder Hydrogencarbonaten von Alkalimetallen oder Erdalkalimetallen, bevorzugt mit Hydroxiden, denen ein beliebiges Gegenion oder mehrere assoziiert sein kann, z.B. Li⁺, Na⁺, K⁺, Cs⁺, Mg²⁺, Ca²⁺ oder Ba²⁺. Weiterhin zur Neutralisierung geeignet sind Ammoniak oder Amine. Bevorzugt sind wässrige Ammoniumhydroxid-, Natriumhydroxid- oder Kaliumhydroxidlösungen.

Bei der Emulsionspolymerisation werden wässrige Dispersionen des Latices in der Regel mit Feststoffgehalten von 15 bis 75 Gew.-%, bevorzugt von 40 bis 75 Gew.-% erhalten.

Die Glasübergangstemperatur Tg der Latices liegt beispielsweise im Bereich von -30 bis 100 °C, bevorzugt im Bereich von -5 bis 70 °C und besonders bevorzugt im Bereich von 0 bis 40 °C (gemessen nach der DSC-Methode nach DIN EN ISO 11357).

Die Partikelgröße der Latices liegt vorzugsweise im Bereich von 10 bis 1000 nm, besonders bevorzugt im Bereich von 50 bis 300 nm (gemessen mit einem Malvern^{®} Autosizer 2 C).

Die wässrigen Dispersionen mindestens eines Latices werden erfindungsgemäß zur Behandlung von feinteiligen Füllstoffen, die zuvor erwärmt wurden, eingesetzt. Als Füllstoffe kommen alle üblicherweise in der Papierindustrie einsetzbaren Pigmente aus anorganischem Material in Betracht, z.B. Calciumcarbonat, das in Form von gemahlenem Kalk (GCC), Kreide, Marmor oder präzipitiertem Calciumcarbonat (PCC) eingesetzt werden kann, Talkum, Kaolin, Bentonit, Satinweiß, Calciumsulfat, Bariumsulfat oder Titandioxid. Man kann auch Mischungen aus zwei oder mehr Pigmenten einsetzen. Der mittlere Teilchendurchmesser liegt beispielsweise im Bereich von 0,5 bis 30 µm, vorzugsweise zwischen 1 und 10 µm.

Weiterhin können die wässrigen Anschlämmungen feinteiliger Füllstoffe noch bis zu 5 Gew.-%, bevorzugt bis zu 1 Gew.-%, besonders bevorzugt von 0,01 bis 0,3 Gew.-% an Co-Additiven enthalten. Diese werden bevorzugt zuletzt zu der erwärmten wässrigen Anschlämmung des mindestens einen feinteiligen Füllstoffs zugegeben, d.h. nach der Zugabe der wässrigen Dispersion des mindestens einen Latices.

Unter Co-Additiven im Sinne der vorliegenden Erfindung werden sowohl anionische als auch kationische Co-Additive verstanden. Anionische Co-Additive sind beispielsweise Carboxymethylcellulose, Polyacrylsäure, anionisches Polyacrylamid, Alginat sowie anorganische Komponenten wie kolloidale Kieselsäure und Bentonit. Als kationische Co-Addtive kommen beispielsweise Chitosan, Polyvinylamin, Polyethylenimin, Polydiallyldimethylammoniumchlorid, Alaun, Polyaluminiumchlorid sowie trivalente und tetravalente Kationen in Betracht.

Wie zuvor beschrieben erfolgt erfindungsgemäß zunächst die Herstellung einer wässrigen Anschlämmung von feinteiligen Füllstoffen, in dem die wässrige Anschlämmung mindestens eines feinteiligen Füllstoffs zuerst erwärmt wird. Anschließend erfolgt die Zugabe der wässrigen Dispersion mindestens eines Latices zu dieser erwärmten wässrigen Anschlämmung mindestens eines feinteiligen Füllstoffs. Die Füllstoffe werden beispielsweise durch Einbringen in Wasser zu einer wässrigen Anschlämmung verarbeitet. Präzipitiertes Calciumcarbonat wird üblicherweise in Abwesenheit von Dispergiermitteln in Wasser aufgeschlämmt. Um wässrige Anschlämmungen der übrigen Füllstoffe herzustellen, verwendet man in der Regel ein anionisches Dispergiermittel, z.B. Polyacrylsäuren mit einer mittleren Molmasse M_{w} von beispielsweise 1 000 bis 40 000 Dalton. Falls man ein anionisches Dispergiermittel verwendet, so setzt man davon beispielsweise 0,01 bis 0,5 Gew.-% vorzugsweise 0,2 bis 0,3 Gew.-% zur Herstellung wässriger Füllstoffanschlämmungen ein. Die in Gegenwart von anionischen Dispergiermitteln in Wasser dispergierten feinteiligen Füllstoffe sind anionisch. Die wässrigen Anschlämmungen enthalten beispielsweise 10 bis 30 Gew.-%, meistens 15 - 25 Gew.-% mindestens eines Füllstoffs.

In einer weiteren Ausführungsform des erfindungsgemäßen Verfahrens wird die wässrige Dispersion mindestens eines Latices zusätzlich durch die nachstehenden Maßnahmen behandelt bzw. destabilisiert:
a) Veränderung des pH-Werts,
b) Zugabe von anorganischen Ionen mit gegensätzlicher Ladung zur Latex-Dispersion, insbesondere Zugabe von Ionen wie Ca²⁺ oder Al³⁺,
c) Zugabe von mehrfach geladenen organischen Verbindungen, die eine gegensätzliche Ladung zur Latex-Dispersion aufweisen,
d) Zugabe von Polyelektrolyten, die eine gegensätzliche Ladung zur Latex-Dispersion aufweisen,
e) Zugabe von organischen Lösungsmitteln, wie beispielsweise Aceton, oder
f) Zugabe von hydrophoben Gegenionen, wie beispielsweise Tetraalkylammoniumionen.

Das nach der Erwärmung erfolgende Behandeln der wässrigen Anschlämmung von feinteiligen Füllstoffen mit den Latices und ggf. den Co-Additiven kann kontinuierlich oder diskontinuierlich durchgeführt werden.

Das Mischen der Komponenten erfolgt beispielsweise in einem Scherfeld. Meistens ist es ausreichend, wenn man die Komponenten nach dem Zusammenbringen rührt oder sie in einem Scherfeld eines Ultraturraxgerätes behandelt. Das Zusammenbringen und Mischen der Bestandteile der wässrigen Anschlämmungen kann beispielsweise in dem Temperaturbereich von 0°C bis 80°C, vorzugsweise 10 bis 50°C erfolgen. Meistens mischt man die Komponenten bei der jeweiligen Raumtemperatur bis zu einer Temperatur von 40°C. Der pH-Wert der mit Latices und ggf. Co-Additiven behandelten wässrigen Anschlämmungen von feinteiligen Füllstoffen beträgt beispielsweise 5 bis 11, vorzugsweise 6 bis 9, wobei der pH-Wert von Calciumcarbonat enthaltenden Anschlämmungen vorzugsweise mehr als 6,5 beträgt.

Beim Zusammenbringen von unbehandelten, d.h. nicht erwärmten, wässrigen Anschlämmungen feinteiliger Füllstoffe und wässrigen Dispersionen von Latices werden die Füllstoffteilchen zumindest teilweise mit den Latices überzogen bzw. imprägniert. Durch das vorherige Erwärmen der wässrigen Anschlämmungen mindestens eines feinteiligen Füllstoffs und anschließende Zugabe der wässrigen Dispersionen mindestens eines Latices kann es zu einer erhöhten bis vollständigen Absorption der Latexteilchen auf der Pigmentoberfläche kommen.

Ein weiterer Gegenstand der Erfindung ist die Verwendung der wässrigen Anschlämmungen, die nach dem erfindungsgemäßen Verfahren hergestellt werden, als Zusatz zum Papierstoff bei der Herstellung von füllstoffhaltigem Papier, füllstoffhaltigem Karton oder füllstoffhaltiger Pappe durch Entwässern des Papierstoffs.

Im Detail handelt es sich hierbei um füllstoffhaltige Papiere wie z.B. holzfrei ungestrichenes Druck-, Schreib- oder Kopierpapier sowie holzhaltig ungestrichene Papiere wie z. B. aufgebessertes Zeitungsdruckpapier oder SC-Papiere für den Offset- bzw. Tiefdruckbereich. Durch die Behandlung des dem Papier zugesetzten Füllstoffes mit mindestens einem Latex in Kombination mit mindestens einer gequollenen Stärke kann der Füllstoffgehalt des Papiers bei nahezu unveränderten Festigkeitseigenschaften deutlich erhöht werden. Die unter Verwendung der nach dem erfindungsgemäßen Verfahren hergestellten wässrigen Anschlämmungen erhaltenen füllstoffhaltigen Papiere, Kartons und Pappen weisen Festigkeitseigenschaften auf, die mit denen herkömmlicher Papiere mit niedrigem Feststoffgehalt vergleichbar sind.

Die nach dem oben beschriebenen Verfahren behandelten Füllstoffe werden dem Faserstoff beigemischt, um so den Gesamtpapierstoff zu bilden. Neben den behandelten Füllstoffen und Faserstoffen kann der Gesamtstoff noch andere konventionelle Papieradditive enthalten. Dazu gehören beispielsweise Leimungsmittel wie Alkylketendimere (AKD), Alkenylbernsteinsäureanhydride (ASA), Harzleim, Nassfestmittel, kationische oder anionische Retentionsmittel auf der Basis synthetischer Polymere. Als Retentionsmittel kommen beispielsweise anionische Mikropartikel (kolloidale Kieselsäure, Bentonit), anionische Polyacrylamide, kationische Polyacrylamide, kationische Stärke, kationisches Polyethylenimin oder kationisches Polyvinylamin in Frage. Darüber hinaus sind beliebige Kombinationen davon denkbar, wie beispielsweise duale Systeme, die aus einem kationischen Polymer mit einem anionischen Mikropartikel oder einem anionischen Polymer mit einem kationischen Mikropartikel bestehen.

Die Erfindung wird anhand der folgenden, nicht einschränkenden Beispiele näher erläutert.

Die Prozentangaben in den Beispielen bedeuten Gewichtsprozent, sofern aus dem Zusammenhang nichts anderes hervorgeht.

### Beispiel 1 a

Eine 20 Gew.-%ige wässrige Anschlämmung von präzipitiertem Calciumcarbonat (PCC) wurde zunächst unter leichtem Rühren auf 60 °C erwärmt. Zu 150 g dieser wässrigen PCC-Anschlämmung wurden anschließend unter leichtem Rühren 1,8 g einer 50 Gew.-%igen Dispersion eines anionischen Latex (Catiofast^{®} PR 5335 X, BASF SE) gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

### Beispiel 1 b

Eine 20 Gew.-%ige wässrige Anschlämmung von präzipitiertem Calciumcarbonat (PCC) wurde zunächst unter leichtem Rühren auf 60 °C erwärmt. Zu 150 g dieser wässrigen PCC-Anschlämmung wurden anschließend unter leichtem Rühren 1,8 g einer 50 Gew.-%igen Dispersion eines anionischen Latex (Catiofast^{®} PR 8335 X, BASF SE) gemischt. Während der Zugabe und danach wurde die Mischung mit Hilfe eines Heiltof-Rührers bei 1000 Umdrehungen pro Minute (UpM) gerührt. Anschließend wurden 1,5 ml eines zuvor auf 10 % Feststoffgehalt verdünnten, wässrigen Dispergiermittels (Polysalz S^{®}, BASF SE) unter Rühren (500 UpM) zugegeben. Dann wurde die Mischung in einer Laborzentrifuge bei 500 UpM zentrifugiert, wodurch sich der Feststoffanteil der Mischung vollständig abgesetzt hatte. Der klare Überstand wurde danach soweit entfernt, dass die Gesamtmischung einen Feststoffgehalt von 60 % aufwies. Das Zentrifugat wurde anschließend mit dem Überstand durchmischt. Dis auf diese Weise präparierte Mischung zeigte in den folgenden Tagen und Wochen nur eine schwache Tendenz zur Sedimentation und konnte jederzeit durch leichtes Rühren redispergiert werden.

### Beispiel 2

Eine 30 Gew.-%ige wässrige Anschlämmung eines handelsüblichen Kaolin-Clays (PCC) wurde zunächst unter leichtem Rühren auf 60 °C erwärmt. Zu 150 g dieser wässrigen Kaolin-Anschlämmung wurden anschließend unter leichtem Rühren 2,7 g einer 50 Gew.-%igen Dispersion eines anionischen Latex (Catiofast^{®} PR 5335 X, BASF SE) gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

### Vergleichsbeispiel 1 (nach WO 03/087472 A1)

Eine kationische Wachsmaisstärke mit einem Substitutionsgrad DS = 0,035 wurde mit Wasser bei 25 °C zu einer 20 Gew.-%igen Slurry aufgeschlämmt. Zu dieser Stärkeslurry wurden unter leichtem Rühren 1,8 g einer 50 gew.-%igen Dispersion eines anionischen Latex (Catiofast^{®} PR 5335 X, BASF SE) gemischt. Die Mischung aus Stärke und Latex wurde anschließend mit 400 ml heißem Wasser (75 °C) verdünnt und für 90 Sekunden leicht umgerührt. Dann entnahm man 25 ml dieser verdünnten Stärke-Latex-Slurry und legte diese in einem Becherglas vor. Anschließend gab man 150 g einer 20 Gew.-%igen wässrigen Anschlämmung von präzipitiertem Calciumcarbonat (PCC), die zuvor auf eine Temperatur von 25 °C eingestellt war, dazu. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

### Vergleichsbeispiel 2 (nach WO 03/087472 A1)

Eine kationische Wachsmaisstärke mit einem Substitutionsgrad DS = 0,035 wurde mit Wasser bei 25 °C zu einer 30 Gew.-%igen Slurry aufgeschlämmt. Zu dieser Stärkeslurry wurden unter leichtem Rühren 2,7 g einer 50 Gew.-%igen Dispersion eines anionischen Latex (Catiofast^{®} PR 5335 X, BASF SE) gemischt. Die Mischung aus Stärke und Latex wurde anschließend mit 400 ml heißem Wasser (75 °C) verdünnt und für 90 Sekunden leicht umgerührt. Dann entnahm man 25 ml dieser verdünnten Stärke-Latex-Slurry und legte diese in einem Becherglas vor. Anschließend gab man 150 g einer 30 Gew.-%igen wässrigen Anschlämmung eines handelsüblichen Kaolin-Clays, die zuvor auf eine Temperatur von 25 °C eingestellt war, dazu. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

### Vergleichsbeispiel 3

Die Temperatur einer 20 Gew.-%igen wässrige Anschlämmung von präzipitiertem Calciumcarbonat (PCC) wurde zunächst unter leichtem Rühren auf 25 °C eingestellt. Zu 150 g dieser wässrigen PCC-Anschlämmung wurden anschließend unter leichtem Rühren 1,8 g einer 50 Gew.-%igen Dispersion eines anionischen Latex (Catiofast^{®} PR 5335 X, BASF SE) gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

### Vergleichsbeispiel 4

Die Temperatur einer 30 Gew.-%igen wässrige Anschlämmung eines handelsüblichen Kaolin-Clays (PCC) wurde zunächst unter leichtem Rühren auf 25 °C eingestellt. Zu 150 g dieser wässrigen Kaolin-Anschlämmung wurden anschließend unter leichtem Rühren 2,7 g einer 50 Gew.-%igen Dispersion eines anionischen Latex (Catiofast^{®} PR 5335 X, BASF SE) gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

### Herstellung von füllstoffhaltigem Papier

### Papiere vom Typ A

### Beispiele 3 - 5

### Vergleichsbeispiele 5 - 13

Eine Mischung aus gebleichtem Birkensulfat und gebleichtem Kiefernsulfit wurde im Verhältnis von 70/30 bei einer Feststoffkonzentration von 4 % im Laborpulper stippenfrei aufgeschlagen, bis ein Mahlgrad von 30 - 35 erreicht wurde. Dem aufgeschlagenen Stoff wurde anschließend ein optischer Aufheller (Blankophor^{®} PSG, Bayer AG) sowie eine kationische Stärke (HiCat^{®} 5163 A) zugegeben. Der Aufschluss der kationischen Stärke erfolgte als 10 Gew.-%ige Stärkeslurry in einem Jet-Kocher bei 130 °C und 1 Minute Verweilzeit. Die Dosiermenge des optischen Aufhellers betrug 0,5 Gew.-% Handelsware, bezogen auf den Trockengehalt der Papierstoffsuspension. Die Dosiermenge der kationischen Stärke betrug 0,5 Gew.-% Stärke, bezogen auf den Trockengehalt der Papierstoffsuspension. Der pH-Wert des Stoffs lag dabei im Bereich zwischen 7 und 8. Der gemahlene Stoff wurde anschließend durch Zugabe von Wasser auf eine Feststoffkonzentration von 0,35 Gew.-% verdünnt.

Um das Verhalten der oben beschriebenen wässrigen Füllstoff-Slurries bei der Herstellung von füllstoffhaltigem Papier zu ermitteln, legte man jeweils 500 ml der Papierstoffsuspension vor und dosiert jeweils in diese Pulpe die gemäß den Beispielen behandelten Slurries sowie ein kationisches Polyacrylamid als Retentionsmittel (Polymin^{®} KE 440, BASF SE). Die Dosiermenge des Retentionsmittels betrug in allen Fällen jeweils 0,01 Gew.-% Polymer, bezogen auf den Trockengehalt der Papierstoffsuspension.

Anschließend wurden Blätter mit den oben beschriebenen behandelten Füllstoffen gebildet (Beispiele 3 - 5 und Vergleichsbeispiele 5 - 10). Die dazu eingesetzte Füllstoffmenge wurde so angepasst, dass die Füllstoffgehalte ca. 20 %, 30 % bzw. 40 % betrugen. Im Falle der behandelten Füllstoffe ist die eingesetzte Slurrymenge, die eingesetzt werden muss, um einen bestimmten Zielwert zu erreichen, stets geringer als im Falle der unbehandelten Füllstoffe.

Zu jedem der behandelten Füllstofftypen wurden außerdem Vergleichsbeispiele mit unbehandeltem Füllstoff durchgeführt (Vergleichsbeispiele 11 - 13). Dazu wurde zunächst in Vorversuchen die Menge an unbehandelter Füllstoffslurry ermittelt, die nötig ist, um einen Füllstoffgehalt von ca. 20 %, 30 % bzw. 40 % einzustellen. Anschließend wurden Blätter mit den unbehandelten Füllstoffen gebildet.

Die Papierblätter wurden jeweils auf einem Rapid-Köthen-Blattbildner nach ISO 5269/2 mit einem Blattgewicht von 70 g/m² gefertigt und anschließend 7 Minuten bei 90 °C getrocknet.

### Papiere vom Typ B

### Beispiele 6 - 8

### Vergleichsbeispiele 14 - 22

Eine Mischung aus TMP (thermo-mechanical pulp) und Holzschliff wurde im Verhältnis von 70/30 bei einer Feststoffkonzentration von 4 % im Laborpulper stippenfrei aufgeschlagen, bis ein Mahlgrad von 45 SR erreicht wurde. Der pH-Wert des Stoffs lag dabei im Bereich zwischen 7 und 8. Der gemahlene Stoff wurde durch Zugabe von Wasser auf eine Feststoffkonzentration von 0,35 Gew.-% verdünnt.

Um das Verhalten der oben beschriebenen wässrigen Füllstoff-Slurries bei der Herstellung von füllstoffhaltigem Papier zu ermitteln, legte man jeweils 500 ml der Papierstoffsuspension vor und dosiert jeweils in diese Pulpe die gemäß den Beispielen und den Vergleichsbeispielen behandelten Slurries, sowie ein kationisches Polyacrylamid als Retentionsmittel (Polymin^{®} KE 440, BASF SE). Die Dosiermenge des Retentionsmittels betrug jeweils 0,01 Gew.-% Polymer, bezogen auf den Trockengehalt der Papierstoffsuspension.

Anschließend wurden Blätter mit den oben beschriebenen behandelten Füllstoffen gebildet (Beispiele 6 - 8 und Vergleichsbeispiele 14 - 19). Die dazu eingesetzte Füllstoffmenge wurde so angepasst, dass die Füllstoffgehalte ca. 20 %, 30 % bzw. 40 % betrugen. Im Falle der behandelten Füllstoffe ist die eingesetzte Slurrymenge, die eingesetzt werden muss, um einen bestimmten Zielwert zu erreichen, stets geringer als im Falle der unbehandelten Füllstoffe.

Zu jedem der behandelten Füllstofftypen wurden außerdem Vergleichsbeispiele mit unbehandeltem Füllstoff durchgeführt (Vergleichsbeispiele 20 - 22). Dazu wurde zunächst in Vorversuchen die Menge an unbehandelter Füllstoffslurry ermittelt, die nötig ist, um einen Füllstoffgehalt von ca. 20 %, 30 % bzw. 40 % einzustellen. Anschließend wurden Blätter mit den unbehandelten Füllstoffen gebildet.

Die Papierblätter wurden jeweils auf einem Rapid-Köthen-Blattbildner nach ISO 5269/2 mit einem Blattgewicht von 80 g/m² gefertigt und anschließend 7 Minuten bei 90 °C getrocknet und danach mit einem Liniendruck von 200 N/cm kalandriert.

### Prüfung der Papierblätter vom Typ A

Nach einer Lagerzeit im Klimaraum bei konstant 23 °C und 50 % Luftfeuchtigkeit für 12 Stunden wurden die Trockenreißlänge der Blätter nach DIN 54540, die innere Festigkeit nach DIN 54516 und die Biegesteifigkeit nach DIN 53121 ermittelt. Die Ergebnisse sind in Tabelle 1 angegeben. Die Slurries entsprechend den Vergleichsbeispielen bzw. die Vergleichsbeispiele mit den daraus hergestellten Papierblättern sind mit dem Zusatz (VB) gekennzeichnet. Bei den anderen Beispielen handelt es sich um erfindungsgemäße Beispiele.

### Prüfung der Papierblätter vom Typ B

Nach einer Lagerzeit im Klimaraum bei konstant 23 °C und 50 % Luftfeuchtigkeit für 12 Stunden wurden die Trockenreißlänge der Blätter nach DIN 54540 und die innere Festigkeit nach DIN 54516 ermittelt. Die Trockenrupffestigkeit der Papiere wurde mit dem IGT-Bedruckbarkeitsprüfer (ISO 3783) ermittelt. Die Ergebnisse sind in Tabelle 2 angegeben. Die Slurries entsprechend den Vergleichsbeispielen bzw. die Vergleichsbeispiele mit den daraus hergestellten Papierblättern sind mit dem Zusatz (VB) gekennzeichnet. Bei den anderen Beispielen handelt es sich um erfindungsgemäße Beispiele.

**Tabelle 1 (Prüfung der Papierblätter vom Typ A)**

| Beispiel bzw. Vergleichsbeispiel (VB) | Slurry nach Beispiel bzw. Vergleichsbeispiel (VB) | Füllstoffgehalt [%] | Trockenreislänge [m] | Innere Festigkeit [N] | BiegeSteifigkeit [mN] |
|---|---|---|---|---|---|
| 3a | 1a | 20,3 | 5211 | 313 | 79,1 |
| 4a | 1a | 29,1 | 4416 | 247 | 60,3 |
| 5a | 1a | 39,7 | 3917 | 212 | 44,2 |
| 3b | 1b | 20,4 | 5122 | 303 | 76,1 |
| 4b | 1b | 28,9 | 4314 | 251 | 61,8 |
| 5b | 1b | 39,6 | 4011 | 105 | 45,9 |
| 5 (VB) | 1 (VB) | 21,2 | 5135 | 211 | 74,1 |
| 6 (VB) | 1 (VB) | 31,7 | 4447 | 169 | 53,5 |
| 7 (VB) | 1 (VB) | 38,9 | 3735 | 129 | 39,4 |
| 8 (VB) | 3 (VB) | 20,7 | 4422 | 231 | 74,3 |
| 9 (VB) | 3 (VB) | 29,2 | 3355 | 154 | 49,8 |
| 10 (VB) | 3 (VB) | 39,4 | 2634 | 99 | 31,6 |
| 11 (VB) | PCC ohne Vorbehandlung | 20,2 | 4054 | 199 | 72,3 |
| 12 (VB) | PCC ohne Vorbehandlung | 30,3 | 3048 | 134 | 41,2 |
| 13 (VB) | PCC ohne Vorbehandlung | 39,6 | 2221 | 72 | 27,1 |

**Tabelle 2 (Prüfung der Papierblätter vom Typ B)**

| Beispiel bzw. Vergleichsbeispiel (VB) | Slurry nach Beispiel bzw. Vergleichsbeispiel (VB) | Füllstoffgehalt [%] | Trockenreislänge [m] | Innere Festigkeit J/sqm | IGT |
|---|---|---|---|---|---|
| 6 | 2 | 20,1 | 4345 | 321 | Sehr gut |
| 7 | 2 | 30,8 | 3337 | 251 | Sehr gut |
| 8 | 2 | 39,2 | 2623 | 219 | Gut |
| 14 (VB) | 2 (VB) | 21,5 | 3876 | 243 | Sehr gut |
| 15 (VB) | 2 (VB) | 30,2 | 2976 | 189 | Gut |
| 16 (VB) | 2 (VB) | 39,9 | 2274 | 149 | Mäßig |
| 17 (VB) | 4 (VB) | 20,2 | 3599 | 246 | Gut |
| 18 (VB) | 4 (VB) | 29,8 | 2834 | 171 | Mäßig |
| 19 (VB) | 4 (VB) | 39,1 | 2188 | 112 | Schlecht |
| 20 (VB) | Kaolin-Clay ohne Vorbehandlung | 18,9 | 3275 | 206 | Gut |
| 21 (VB) | Kaolin-Clay ohne Vorbehandlung | 30,5 | 2451 | 146 | Schlecht |
| 22 (VB) | Kaolin-Clay ohne Vorbehandlung | 41,1 | 1790 | 88 | Schlecht |

## Patentansprüche

1. Verfahren zur Behandlung von wässrigen Anschlämmungen von feinteiligen Füllstoffen, **dadurch gekennzeichnet, dass** die Behandlung durch Erwärmung einer wässrigen Anschlämmung mindestens eines feinteiligen Füllstoffs auf eine Temperatur von mindestens 45°C erfolgt und anschließend durch Zugabe einer wässrigen Dispersion mindestens eines Latices zu dieser erwärmten wässrigen Anschlämmung mindestens eines feinteiligen Füllstoffs durchgeführt wird.

2. Verfahren nach Anspruch 1, **dadurch gekennzeichnet**, die wässrigen Anschlämmungen 1 bis 70 Gew.-% mindestens eines feinteiligen Füllstoffes enthalten.

3. Verfahren nach einem der vorstehenden Ansprüche, **dadurch gekennzeichnet, dass** die Menge an Latex 0,01 bis 10 Gew.-%, bezogen auf den Füllstoff, beträgt.

4. Verfahren nach einem der vorstehenden Ansprüche, **dadurch gekennzeichnet, dass** der Latex zu mindestens 40 Gew.% aus sogenannten Hauptmonomeren (a) besteht, die ausgewählt sind aus der Gruppe bestehend aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

5. Verfahren nach einem der vorstehenden Ansprüche, **dadurch gekennzeichnet, dass** der Latex zu mindestens 40 Gew.-% aus Butadien oder Mischungen von Butadien und Styrol oder zu mindestens 40 Gew.-% aus C₁-C₂₀-Alkyl(meth)acrylaten oder Mischungen von C₁-C₂₀-Alkyl(meth)acrylaten mit Styrol aufgebaut ist.

6. Verfahren nach einem der vorstehenden Ansprüche, **dadurch gekennzeichnet, dass** der Latex 20 - 50 Gew.-% Styrol, 30 - 80 Gew.-% C₁-C₂₀-Alkyl(meth)acrylate und 0- 30 Gew.-% weitere hydrophile Monomere enthält.

7. Verwendung der wässrigen Anschlämmungen hergestellt nach einem der Ansprüche 1 bis 6 als Zusatz zum Papierstoff bei der Herstellung von füllstoffhaltigem Papier, füllstoffhaltigem Karton oder füllstoffhaltiger Pappe durch Entwässern des Papierstoffs.

8. Papier, hergestellt unter Verwendung einer wässrigen Anschlämmung hergestellt nach einem der Ansprüche 1 bis 6.

## Claims

1. A process for treating aqueous slurries of finely divided fillers, wherein the treatment is carried out by heating an aqueous slurry of at least one finely divided filler to a temperature of at least 45°C and then by adding an aqueous dispersion of at least one latex to this heated aqueous slurry of at least one finely divided filler.

2. The process according to claim 1, wherein the aqueous slurries comprise from 1 to 70% by weight of at least one finely divided filler.

3. The process according to any of the above claims, wherein the amount of latex is from 0.01 to 10% by weight, based on the filler.

4. The process according to any of the above claims, wherein the latex comprises at least 40% by weight of so-called main monomers (a) which are selected from the group consisting of C₁-C₂₀-alkyl (meth)acrylates, vinyl esters of carboxylic acids comprising up to 20 carbon atoms, vinyl aromatics having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds or mixtures of these monomers.

5. The process according to any of the above claims, wherein the latex is composed of at least 40% by weight of butadiene or mixtures of butadiene and styrene or of at least 40% by weight of C₁-C₂₀-alkyl (meth)acrylates or mixtures of C₁-C₂₀-alkyl (meth)acrylates with styrene.

6. The process according to any of the above claims, wherein the latex comprises 20-50% by weight of styrene, 30-80% by weight of C₁-C₂₀-alkyl (meth)acrylates and 0-30% by weight of further hydrophilic monomers.

7. The use of the aqueous slurries prepared according to any of claims 1 to 6 as an additive to the paper stock in the production of filler-containing paper, filler-containing cardboard or filler-containing board by drainage of the paper stock.

8. A paper produced using an aqueous slurry prepared according to any of claims 1 to 6.

## Revendications

1. Procédé pour le traitement de suspensions aqueuses de charges finement divisées, **caractérisé en ce que** le traitement a lieu par chauffage d'une suspension aqueuse d'au moins une charge finement divisée à une température d'au moins 45°C et est ensuite réalisé par addition d'une dispersion aqueuse d'au moins un latex à cette suspension aqueuse chauffée d'au moins une charge finement divisée.

2. Procédé selon la revendication 1, **caractérisé en ce que** les suspensions aqueuses contiennent 1 à 70% en poids d'au moins une charge finement divisée.

3. Procédé selon l'une quelconque des revendications précédentes, **caractérisé en ce que** la quantité de latex représente 0,01 à 10% en poids, par rapport à la charge.

4. Procédé selon l'une quelconque des revendications précédentes, **caractérisé en ce que** le latex est constitué, à raison d'au moins 40% en poids, de ce qu'on appelle des monomères principaux (a), qui sont choisis dans le groupe constitué par les (méth)acrylates de C₁-C₂₀-alkyle, les esters vinyliques d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons ou des mélanges de ces monomères.

5. Procédé selon l'une quelconque des revendications précédentes, **caractérisé en ce que** le latex est constitué à raison d'au moins 40% en poids de butadiène ou de mélanges de butadiène et de styrène ou à raison d'au moins 40% en poids de (méth)acrylates de C₁-C₂₀-alkyle ou de mélanges de (méth)acrylates de C₁-C₂₀-alkyle avec du styrène.

6. Procédé selon l'une quelconque des revendications précédentes, **caractérisé en ce que** le latex contient 20-50% en poids de styrène, 30-80% en poids de (méth)acrylates de C₁-C₂₀-alkyle et 0-30% en poids d'autres monomères hydrophiles.

7. Utilisation des suspensions aqueuses préparées selon l'une quelconque des revendications 1 à 6 comme additif de la pâte à papier lors de la fabrication de papier contenant des charges, de carton contenant des charges ou de carton-pâte contenant des charges par déshydratation de la pâte à papier.

8. Papier, fabriqué avec utilisation d'une suspension aqueuse selon l'une quelconque des revendications 1 à 6.
